# EUROPÄISCHE PATENTSCHRIFT

(11) **EP 2 688 839 B1**
(45) Veröffentlichungstag und Bekanntmachung des Hinweises auf die Patenterteilung: **14.09.2016**
(21) Anmeldenummer: 12707519.0
(22) Anmeldetag: 28.02.2012
(51) Int. Cl.: C01B 31/04, C01B 33/107

(54) **VERWENDUNG VON SILIZIUMCARBIDROHREN MIT FLANSCH- ODER BÖRDELENDE**
USE OF SILICON CARBIDE TUBES WITH A FLANGED OR FLARED END
UTILISATION DE TUBES DE CARBURE DE SILICIUM PRÉSENTANT UNE EXTRÉMITÉ À COLLERETTE OU À BORD RABATTU

(30) Priorität: 25.03.2011 DE 102011006111; 14.12.2011 DE 102011088532
(43) Veröffentlichungstag der Anmeldung: 29.01.2014
(73) Patentinhaber: Evonik Degussa GmbH, 45128 Essen (DE)
(72) Erfinder: WEHNER, Bernd, 63791 Karlstein (DE); ZIPPER, Christof, 79618 Rheinfelden (DE); STOCHNIOL, Guido, 45721 Haltern Am See (DE); PAULI, Ingo, 61389 Schmitten (DE); SCHLADERBECK, Norbert, 65779 Kelkheim (DE)
(86) Internationale Anmeldenummer: PCT/EP2012/053356
(87) Internationale Veröffentlichungsnummer: WO 2012/130547

(56) Entgegenhaltungen:
- DE-A1-102005 005 044
- ANONYM: "Rekuperatorrohre -Si/SiC Strahlrohre", AVION , 29. August 2005 (2005-08-29), XP002677554, Gefunden im Internet: URL:http://avion-europe.de/rekuperatorrohr e.html [gefunden am 2012-06-12]

## Beschreibung

Die Erfindung betrifft die Verwendung von Siliziumcarbidrohren, die ein Flansch- oder Bördelende aufweisen und am anderen Ende verschlossen sind, in Verfahren zur Umsetzung von Chlorsilanen.

Die dem Fachmann bekannten unterschiedlichen Typen von keramischen Rohr, das ganz oder teilweise aus Siliziumcarbid besteht, oder in dem das Siliziumcarbid auf unterschiedliche Weise gebunden ist, werden im Rahmen der Erfindung mit *"xSiC -* Rohr" abgekürzt. Das *xSiC -* Rohr kann *als "langgestreckter becherartiger Formkörper"* ausgeführt sein.

Die Gasdichtigkeit solcher *xSiC* - Rohre kann sowohl durch den Werkstoff selbst als auch durch beim Brennen entstandene Deckschichten gegeben sein.

Im Stand der Technik sind Siliziumcarbidrohre seit Langem bekannt. In der Prozesstechnik beispielsweise werden Rohre aus solchem Material für Wärmetauscher eingesetzt. Die Rohre enden stumpf mit flachem Rohrquerschnitt. Beim Übergang des *xSiC -* Rohres auf Metall oder einen anderen Werkstoff wird Dichtheit mit einem Dichtungselement aus Elastomer erreicht.

In der Offenlegungsschrift DE 102005005044 A1 ist für ein Verfahren zur Herstellung von Trichlorsilan mittels thermischer Hydrierung von Siliziumtetrachlord ein offenes Rohrsystem vorgesehen, das als Wärmetauscher das Produktgemisch mittels einer kontrollierten Verweilzeit der Produktmischung abkühlt.

In der Produktbeschreibung der Firma AVION Europa GmbH & Co. KG, Röhrenspring 18, 58093 Hagen, wird ein Si/SiC Strahlrohr in einseitig geschlossener Ausführung mit Flansch offenbart. Der Flansch ist als Rohrflansch ausgeführt, der mit dem Strahlrohr verbunden ist, wie der Fachmann an der Teilvergrößerung neben der Abbildung erkennt. Das Strahlrohr ist auf der mit dem Flansch versehenen Seite dadurch einseitig geschlossen, dass der Flansch mittels Stahladapter an die Oberkante des Ofens oder Brenners montiert ist. Das andere, nicht mit dem Flansch versehene Ende ist notwendig offen, um die mit dem Brenner erzeugte Wärmeenergie in den umgebenden Raum bzw. Bereich, wo die Wärmeenergie benötigt wird, freizusetzen.

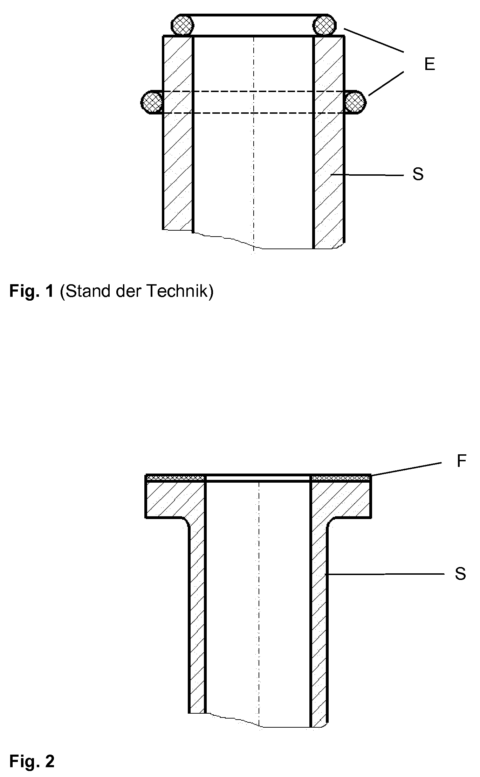

**Fig. 1** zeigt schematisch ein dem Stand der Technik gemäßes *xSiC -* Rohr (S) mit elastomerer Dichtung (E), die zum Beispiel als O-Ring ausgeführt sein kann, in zwei unterschiedlichen Anordnungen.

Weil die Temperaturbeständigkeit elastomerer Dichtungen auf einen Bereich unter etwa 250 °C begrenzt ist, werden die Vorteile des xSiC - Werkstoffes nicht in Gänze ausgenutzt.

Somit bestand die Aufgabe der vorliegenden Erfindung darin, ein Dichtungskonzept mittels nicht elastomerer Dichtungen zu ermöglichen, das die Beständigkeit keramischer Reaktorrohre gegenüber aggressiven Medien bei hohen Temperaturen nutzt, insbesondere in Verfahren zur Umsetzung von Chlorsilanen.

Diese Aufgabe ist gelöst, indem das beschriebene *xSiC -* Rohr einen Flansch oder eine Bördelung aufweist.

Gegenstand der Erfindung ist demnach die Verwendung eines keramischen Rohres, das ganz oder teilweise aus Siliziumcarbid besteht, oder in dem das Siliziumcarbid auf unterschiedliche Weise gebunden ist, und das als langgestreckter, becherartiger Formkörper ausgeführt ist, in Verfahren zur Umsetzung von Chlorsilanen, wobei das keramische Rohr an einem Ende einen Flansch oder eine Bördelung aufweist und am anderen Ende verschlossen ist.

Der verwendungsgemäße Vorteil besteht darin, dass keine elastomere Dichtung mehr eingesetzt werden muss. Anstatt dessen können vorzugsweise Flachdichtungen eingesetzt werden.

Die Erfindung wird im Folgenden näher erläutert.

Die erfindungsgemäße Verwendung des keramischen Rohres in Verfahren zur Umsetzung von Chlorsilanen zeichnet sich dadurch aus, dass das keramische Rohr an einem Ende einen Flansch oder eine Bördelung aufweist und am anderen Ende verschlossen ist.

Erfindungsgemäß kann das keramische Rohr damit bei wesentlich höheren Temperaturen verwendet werden, als keramische Rohre mit elastomeren Dichtungen gemäß Stand der Technik erlauben, beispielsweise bei Temperaturen von 550 °C und höher. Ebenfalls ist die erfindungsgemäße Verwendung bei der Umsetzung korrosiver Substanzen möglich. Vorzugsweise hält der erfindungsgemäß verwendete Formkörper einem Innenüberdruck von 0,2 bis 50 bar, bevorzugt von 0,2 bis 8 bar stand.

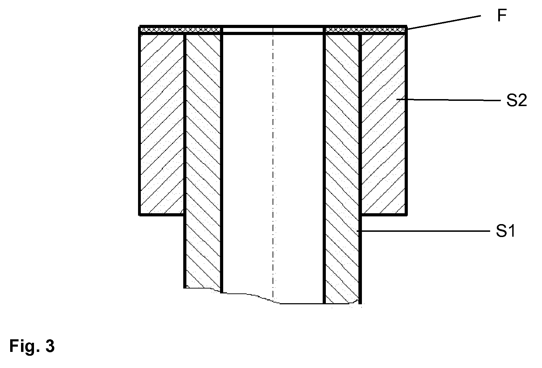

Mögliche Ausführungen des keramischen Rohres in der erfindungsgemäßen Verwendung zeigen die Figuren 2 und 3. Diese Ausführungen können erfindungsgemäß mit einer Dichtung, vorzugsweise mit einer Flachdichtung verwendet werden. Die Verwendung des mit einem Flansch- oder Bördelende versehenen Formkörpers mit einer Flachdichtung ist besonders bevorzugt. Dies ermöglicht seinen Einsatz bei Überdrücken von 0,2 bis 50 bar, besonders bevorzugt bei einem Überdruck von etwa 6 bar.

Die Hinweiszeichen bedeuten:
- F: Flachdichtung
- S, S1, S2: Formkörper an dem Flansch oder Bördelung aufweisenden Ende

Die erfindungsgemäße Verwendung solcher keramischen Rohre ermöglicht die Umsetzung von Chlorsilanen, vorzugsweise die Hydrierung von Chlorsilanen, weiterhin bevorzugt die Hydrierung von Tetrachlorsilan mittels Wasserstoff zu Trichlorsilan und HCl bei 900 °C bis 1100 °C, in Gegenwart eines Katalysators oder ohne einen Katalysator, vorzugsweise bei Überdrücken von 0,2 bis 50 bar, besonders bevorzugt bei einem Überdruck von etwa 6 bar.

**Fig. 2** zeigt ein erfindungsgemäß verwendetes keramisches Rohr an seinem als Flansch ausgebildeten Ende. Es kann vorteilhaft sein, diese Ausführung mit einer Flachdichtung (F) zu verwenden.

Eine weitere erfindungsgemäße Verwendung kann darin bestehen, dass am keramischen Rohr an seinem als Flansch ausgebildeten Ende eine Flachdichtung (F) eingesetzt wird, die aus Graphit-, Glimmer- und/oder anderen hoch temperaturbeständigen Werkstoffen besteht. Der Aufbau solcher Dichtungen ist dem Fachmann bekannt.

**Fig. 3** zeigt eine Gestalt des Formkörpers, bei dem ein keramisches Rohr (S1) in ein weiteres keramisches Rohr (S2) eingepasst oder eingesteckt ist, wobei die Stirnflächen von S1 und S2 in einer Ebene liegen. Vorzugsweise ist somit ein keramisches Rohr erhalten, das ein bewegliches oder unbewegliches, besonders bevorzugt ein unbewegliches Flanschende aufweist. Es kann vorteilhaft sein, diese Ausführung mit einer Flachdichtung (F) zu verwenden.

Weitere Varianten der Anordnung von Bauteilen aus xSiC sind möglich, um zu einer Flansch- und/oder Bördelausführung zu kommen. Diese sind hier nicht allumfassend dargestellt.

Eine erfindungsgemäße Verwendung des keramischen Rohres besteht bei der Umsetzung von Chlorsilanen in ofenbeheizten Rohrreaktoren zur Hydrierung von Chlorsilanen.
Dabei muß der Reaktionsbereich nicht nur aus dem langgestreckten Formkörper selbst bestehen, sondern auch ineinander gesteckte Rohrkombinationen sind möglich, deren Rohre an einem Ende in Form eines Flansches oder Bördels ausgeführt sind.

## Patentansprüche

1. Verwendung eines keramischen Rohres, das ganz oder teilweise aus Siliziumcarbid besteht, oder in dem das Siliziumcarbid auf unterschiedliche Weise gebunden ist, und das als langgestreckter, becherartiger Formkörper ausgeführt ist, in Verfahren zur Umsetzung von Chlorsilanen, wobei das keramische Rohr an einem Ende einen Flansch oder eine Bördelung aufweist und am anderen Ende verschlossen ist.

2. Verwendung nach Anspruch 1,
wobei das keramische Rohr zur Umsetzung von Chlorsilanen in ofenbeheizten Rohrreaktoren verwendet wird.

3. Verwendung nach Anspruch 1,
wobei das keramische Rohr bei Hydrierverfahren zur Umsetzung von Chlorsilanen verwendet wird, vorzugsweise zur Hydrierung von Tetrachlorsilan zu Trichlorsilan, vorzugsweise bei einem Überdruck von 0,2 bis 50 bar und Temperaturen von 900 °C bis 1100 °C.

4. Verwendung nach einem der vorhergehenden Ansprüche, wobei am keramischen Rohr an seinem als Flansch ausgebildeten Ende eine Flachdichtung (F) eingesetzt wird, die aus Graphit-, Glimmer- und/oder anderen hoch temperaturbeständigen Werkstoffen besteht.

## Claims

1. Use of a ceramic tube consisting entirely or partly of silicon carbide, or in which the silicon carbide is bound in different ways, and which is in the form of an elongated, cup-like shaped body in processes for conversion of chlorosilanes, wherein the ceramic tube has a flange or a flare at one end and is closed at the other end.

2. Use according to Claim 1,
wherein the ceramic tube is used for conversion of chlorosilanes in furnace-heated tubular reactors.

3. Use according to Claim 1,
wherein the ceramic tube is used in hydrogenation processes for conversion of chlorosilanes, preferably for hydrogenation of tetrachlorosilane to trichlorosilane, preferably at a pressure of 0.2 to 50 bar gauge and temperatures of 900°C to 1100°C.

4. Use according to any of the preceding claims, wherein a flat gasket (F) is used at the end of the ceramic tube configured as a flange and consists of graphite, mica and/or other materials of high thermal stability.

## Revendications

1. Utilisation d'un tube en céramique qui se compose totalement ou en partie de carbure de silicium ou dans lequel le carbure de silicium est lié de manière différente, et qui est réalisé sous forme de corps façonné allongé, de type gobelet, dans un procédé de réaction de chlorosilanes, le tube en céramique présentant à une extrémité une collerette ou un bord rabattu et étant fermé à l'autre extrémité.

2. Utilisation selon la revendication 1, dans laquelle le tube en céramique est utilisé pour faire réagir des chlorosilanes dans des réacteurs tubulaires à chauffage au four.

3. Utilisation selon la revendication 1, dans laquelle le tube en céramique est utilisé dans des procédés d'hydrogénation pour faire réagir des chlorosilanes, de préférence pour l'hydrogénation de tétrachlorosilane en trichlorosilane, de préférence à une surpression de 0,2 à 50 bars et à des températures de 900° C à 1100° C.

4. Utilisation selon l'une quelconque des revendications précédentes, dans laquelle on utilise un joint d'étanchéité plat (F) à l'extrémité réalisée sous forme de collerette du tube en céramique, lequel joint d'étanchéité se compose de graphite, de mica, et/ou d'autres matériaux résistant aux hautes températures.
